# EUROPÄISCHE PATENTANMELDUNG

(11) **EP 4 066 958 A1**
(43) Veröffentlichungstag der Anmeldung: **05.10.2022**
(21) Anmeldenummer: 22161916.6
(22) Anmeldetag: 14.03.2022
(51) Int. Cl.: B21D 28/26, B21D 55/00, G05B 19/4065, G05B 19/404, B30B 15/00

(54) **STANZVORRICHTUNG UND VERFAHREN ZUM BESTIMMEN EINES VERSCHLEISSZUSTANDS EINES PRESSWERKZEUGS**

(30) Priorität: 01.04.2021 DE 102021108310
(71) Anmelder: Lisa Dräxlmaier GmbH, 84137 Vilsbiburg (DE)
(72) Erfinder: HINTERBRANDNER, Florian, 83471 Schönau am Königsee (DE); GIRSCHICK, Tobias, 84036 Landshut (DE); SCHAUMANN, Michael, 83471 Schönau am Königssee (DE)

(57) **Zusammenfassung**

Die vorliegenden Erfindung betrifft eine Stanzvorrichtung (100) zum Stanzen eines Halbzeugs (101), umfassend ein erstes Presswerkzeug (103), ein zweites Presswerkzeug (105), ein zwischen dem ersten Presswerkzeug (103) und dem zweiten Presswerkzeug (105) angeordneter Aufnahmebereich (107) zur Aufnahme des Halbzeugs (101), einen Stanzantrieb (109), welcher ausgebildet ist, das erste Presswerkzeug (103) gegenüber dem zweiten Presswerkzeug (105) zu verlagern, um das in dem Aufnahmebereich (107) aufgenommene Halbzeug (101) zu stanzen, wobei das erste Presswerkzeug (103) zumindest einen Temperatursensor (131) aufweist, welcher ausgebildet ist, eine Temperatur des ersten Presswerkzeugs (103) zu erfassen, wobei das erste Presswerkzeug (103) zumindest einen piezoelektrischen Sensor (133) aufweist, welcher ausgebildet ist, Schwingungen des ersten Presswerkzeugs (103) zu erfassen, wobei die Stanzvorrichtung (100) zumindest einen Positionssensor (135) aufweist, welcher ausgebildet ist, eine Mehrzahl von Positionen des ersten Presswerkzeugs (103) gegenüber dem zweiten Presswerkzeug (105) zu erfassen, eine Steuerung (137), welche ausgebildet ist, auf Basis der erfassten Temperatur des ersten Presswerkzeugs (103), auf Basis der erfassten Schwingungen des ersten Presswerkzeugs (103) und auf Basis der erfassten Mehrzahl von Positionen des ersten Presswerkzeugs (103) einen Verschleißzustand des ersten Presswerkzeugs (103) und/oder des zweiten Presswerkzeugs (105) zu erfassen.

## Beschreibung

Die Erfindung betrifft eine Stanzvorrichtung zum Stanzen eines Halbzeugs, sowie ein Verfahren zum Bestimmen eines Verschleißzustands eines ersten Presswerkzeugs und/oder eines zweiten Presswerkzeugs einer Stanzvorrichtung zum Stanzen eines Halbzeugs.

In herkömmlichen Stanzvorrichtungen zum Stanzen von Halbzeug, wie z.B. Blechstreifen, werden kontinuierlich Bauteile ausgestanzt, wodurch es während des Produktionsprozesses Verschleiß-bedingt unter Umständen zu Ausfällen von entsprechenden Stanzvorrichtungen, oder zur Herstellung von Bauteilen von reduzierte Qualität kommen kann. Eine kontinuierliche, insbesondere sensorische Überwachung des Verschließzustands von herkömmlichen Stanzvorrichtungen wird gemäß dem bekannten Stand der Technik nicht umgesetzt.

Es ist eine Aufgabe der vorliegenden Erfindung, eine Stanzvorrichtung zum Stanzen von Halbzeug bereitzustellen, deren Verschleißzustand wirksam überwacht werden kann.

Die vorliegende Erfindung beruht auf der Erkenntnis, dass ein erstes Presswerkzeug der Stanzvorrichtung einen Temperatursensor zum Erfassen einer Temperatur des ersten Presswerkzeugs und einen piezoelektrischen Sensor zum Erfassen von Schwingungen des erstes Presswerkzeugs aufweist, und dass die Stanzvorrichtung einen Positionssensor aufweist, welcher ausgebildet ist, eine Mehrzahl von Positionen des ersten Presswerkzeugs zu erfassen.

Eine Steuerung ist hierbei ausgebildet, auf Basis der erfassten Temperatur des ersten Presswerkzeugs, auf Basis der erfassten Schwingungen des ersten Presswerkzeugs und auf Basis der erfassten Mehrzahl von Positionen des ersten Presswerkzeugs einen Verschleißzustand des ersten Presswerkzeugs und/oder eines zweiten Presswerkzeugs der Stanzvorrichtung zu bestimmen.

Gemäß einem ersten Aspekt der Erfindung wird die Aufgabe durch eine Stanzvorrichtung zum Stanzen eines Halbzeugs gelöst, umfassend ein erstes Presswerkzeug, ein zweites Presswerkzeug, ein zwischen dem ersten Presswerkzeug und dem zweiten Presswerkzeug angeordneter Aufnahmebereich zur Aufnahme des Halbzeugs, einen Stanzantrieb, welcher ausgebildet ist, das erste Presswerkzeug gegenüber dem zweiten Presswerkzeug zu verlagern, um das in dem Aufnahmebereich aufgenommene Halbzeug zu stanzen, wobei das erste Presswerkzeug zumindest einen Temperatursensor aufweist, welcher ausgebildet ist, eine Temperatur des ersten Presswerkzeugs zu erfassen, wobei das erste Presswerkzeug zumindest einen piezoelektrischen Sensor aufweist, welcher ausgebildet ist, Schwingungen des ersten Presswerkzeugs zu erfassen, wobei die Stanzvorrichtung zumindest einen Positionssensor aufweist, welcher ausgebildet ist, eine Mehrzahl von Positionen des ersten Presswerkzeugs gegenüber dem zweiten Presswerkzeug zu erfassen, und eine Steuerung, welche ausgebildet ist, auf Basis der erfassten Temperatur des ersten Presswerkzeugs, auf Basis der erfassten Schwingungen des ersten Presswerkzeug und auf Basis der erfassten Mehrzahl von Positionen des ersten Presswerkzeugs einen Verschleißzustand des ersten Presswerkzeugs und/oder des zweiten Presswerkzeugs zu bestimmen.

Dadurch wird der technische Vorteil erreicht, dass durch die erfassten Parameter mittels der Steuerung der Verschleißzustand der Stanzvorrichtung, insbesondere des ersten und/oder zweiten Presswerkzeugs, wirksam bestimmt werden kann. Überschreitet der erfasste Verschleißzustand einen kritischen Wert, können beispielsweise Reparaturen, bzw. eine Wartung an dem Stanzvorrichtung rechtzeitig durchgeführt werden, bevor es zu einem vollständigen Ausfall der Stanzvorrichtung kommt, bzw. bevor fehlerhafte Bauteile durch die Stanzvorrichtung ausgestanzt werden.

Mittels des piezoelektrischen Sensors können wirksam Schwingungen des ersten Presswerkzeugs erfasst werden, wobei die erfassten Schwingungen des ersten Presswerkzeugs sich während des andauernden Produktionsprozesses Verschleiß-bedingt verändern. Da das erste Presswerkzeug mit dem zweiten Presswerkzeug innerhalb der Stanzvorrichtung gekoppelt ist, kann durch eine Verschleiß-bedingt Veränderung der erfassten Schwingungen des ersten Presswerkzeugs alternativ oder zusätzlich ein Rückschluss auf den Verschließzustand des zweiten Presswerkzeugs vorgenommen werden.

Die Steuerung kann somit auf Basis der erfassten Parameter des ersten Presswerkzeugs wirksam den Verschleißzustand des ersten und/oder zweiten Presswerkzeugs bestimmen. Die Steuerung kann auf Basis der erfassten Parameter des ersten Presswerkzeugs den Verschleißzustand des ersten Presswerkzeugs bestimmen. Die Steuerung kann auf Basis der erfassten Parameter des ersten Presswerkzeugs den Verschleißzustand des zweiten Presswerkzeugs bestimmen. Die Steuerung kann auf Basis der erfassten Parameter des ersten Presswerkzeugs den Verschleißzustand des ersten und zweiten Presswerkzeugs bestimmen.

Während des Produktionsprozesses entsteht aufgrund der Reibung zwischen den sich bewegenden Teilen der Stanzvorrichtung Wärme, welche zu einer thermischen Ausdehnung von einzelnen Komponenten der Stanzvorrichtung führt. Hierbei sind insbesondere die durch den piezoelektrischen Sensor erfassten Schwingungen des ersten Presswerkzeugs abhängig von der Temperatur des ersten Presswerkzeugs, so dass durch die Erfassung der Temperatur des ersten Presswerkzeugs mittels des Temperatursensors, eine Optimierung, bzw. Anpassung der Werte der erfassten Schwingungen durch die Steuerung durchgeführt werden kann, wodurch die Bestimmung des Verschleißzustands des ersten und/oder zweiten Presswerkzeugs verbessert werden kann.

Zusätzlich erfasst ein Positionssensor eine Mehrzahl von Positionen des ersten Presswerkzeugs gegenüber dem zweiten Presswerkzeug. Wenn das erste Presswerkzeug gegenüber dem zweiten Presswerkzeug verlagert wird, insbesondere periodisch verlagert wird, sind die durch den piezoelektrischen Sensor erfassten Schwingungen des ersten Presswerkzeugs abhängig von der jeweiligen Position des ersten Presswerkzeugs. Somit kann die durch den piezoelektrischen Sensor erfassten Schwingungen des ersten Presswerkzeugs, angepasst in Abhängigkeit der erfassten Temperatur des ersten Presswerkzeugs, in Abhängigkeit von der jeweiligen Position des ersten Presswerkzeugs durch die Steuerung ausgewertet werden, um somit besonders präzise den Verschleißzustand des ersten und/oder zweiten Presswerkzeugs zu bestimmen.

Insbesondere umfasst die Stanzvorrichtung ein Stanzwerkzeug und eine Stanzmaschine, wobei das Stanzwerkzeug insbesondere das erste und zweite Presswerkzeug umfasst, und wobei die Stanzmaschine insbesondere zumindest abschnittsweise den Stanzantrieb umfasst.

Insbesondere ist das erste Presswerkzeug, ein erstes, oberes Presswerkzeug. Insbesondere ist das zweite Presswerkzeug, ein zweites, unteres Presswerkzeug.

Insbesondere umfasst das Halbzeug einen Blechstreifen.

Insbesondere ist die Stanzvorrichtung als eine Exzenterpresse ausgebildet.

In einer Ausführungsform ist der Stanzantrieb ausgebildet, das erste Presswerkzeug gegenüber dem zweiten Presswerkzeug entlang einer vertikalen Verlagerungsrichtung zu verlagern, insbesondere periodisch zu verlagern, und ist der Positionssensor ausgebildet, eine Mehrzahl von vertikalen Verlagerungspositionen des ersten Presswerkzeugs gegenüber dem zweiten Presswerkzeug zu erfassen.

Dadurch wird der technische Vorteil erreicht, dass durch eine Verlagerung des ersten Presswerkzeugs gegenüber dem zweiten Presswerkzeug entlang der vertikalen Verlagerungsrichtung ein wirksamer Stanzvorgang sichergestellt wird. Bei einer periodischen Verlagerung wird das erste Presswerkzeug gegenüber dem zweiten Presswerkzeug mit einer vorbestimmten Periode vertikal verlagert, insbesondere entlang der vertikalen Verlagerungsrichtung periodisch, bzw. kontinuierlich nach oben und nach unten verlagert.

Die Steuerung ist ausgebildet auf Basis der erfassten Temperatur des ersten Presswerkzeugs, auf Basis der erfassten Schwingungen des erstes Presswerkzeugs und auf Basis der erfassten Mehrzahl von vertikalen Verlagerungspositionen einen Verschleißzustand des ersten Presswerkzeugs und/oder des zweiten Presswerkzeugs zu bestimmen.

In einer oberen Verlagerungsposition ist das erste Presswerkzeug hierbei gegenüber dem zweiten Presswerkzeug maximal entlang der vertikalen Verlagerungsrichtung beabstandet. In einer unteren Verlagerungsposition ist das erste Presswerkzeug hierbei gegenüber dem zweiten Presswerkzeug minimal entlang der vertikalen Verlagerungsrichtung beabstandet.

In einer Ausführungsform ist das zweite Presswerkzeug innerhalb der Stanzvorrichtung nicht verlagerbar angeordnet.

Dadurch wird der technische Vorteil erreicht, dass lediglich das erste Presswerkzeug gegenüber dem ortsfest in dem Stanzvorrichtung befestigten zweiten Presswerkzeug verlagert wird.

In einer Ausführungsform weist das erste Presswerkzeug einen Fixierungselement, insbesondere eine Fixierungsplatte, auf, welches an einer Oberseite des in dem Aufnahmebereich aufgenommenen Halbzeugs anlegbar ist, insbesondere mittels einer durch den Stanzantrieb vermittelten Verlagerung des Fixierungselements gegenüber dem zweiten Presswerkzeug, um das in dem Aufnahmebereich aufgenommene Halbzeug zu fixieren.

Dadurch wird der technische Vorteil erreicht, dass der Stanzantrieb das erste Presswerkzeug gegenüber dem zweiten Presswerkzeug derart verlagert, dass das Fixierungselement, insbesondere die Fixierungsplatte, auf der Oberseite des in dem Aufnahmebereich aufgenommenen Halbzeugs anliegt und dadurch das Halbzeug fixiert wird. Das Fixierungselement, insbesondere die Fixierungsplatte, fungiert somit als ein Niederhalter für das Halbzeug.

In einer Ausführungsform weist das erste Presswerkzeug eine Zwischenplatte auf, welche mit einer Oberseite des Fixierungselements, insbesondere der Fixierungsplatte, verbunden ist, wobei der Temperatursensor und/oder piezoelektrische Sensor insbesondere an der Zwischenplatte angeordnet sind.

Dadurch wird der technische Vorteil erreicht, dass die an der Oberseite des Fixierungselements angeordnete Zwischenplatte zentral innerhalb des ersten Presswerkzeugs angeordnet ist und eine ausreichende Größe zur Aufnahme des Temperatursensors und/oder des piezoelektrischen Sensors aufweist.

In einer Ausführungsform weist das erste Presswerkzeug eine Kopfplatte auf, welche mit einer Oberseite der Zwischenplatte, verbunden ist, wobei die Stanzvorrichtung insbesondere zumindest einen weiteren piezoelektrischen Sensor aufweist, welcher an der Kopfplatte angeordnet ist, und ausgebildet ist, weitere Schwingungen des ersten Presswerkzeugs zu erfassen, wobei die Steuerung insbesondere ausgebildet ist, auf Basis der erfassten Temperatur des ersten Presswerkzeugs, auf Basis der erfassten Schwingungen des ersten Presswerkzeugs, auf Basis der erfassten weiteren Schwingungen des ersten Presswerkzeugs und auf Basis der erfassten Mehrzahl von Positionen des ersten Presswerkzeugs einen Verschleißzustand des ersten Presswerkzeugs und/oder des zweiten Presswerkzeugs zu bestimmen.

Dadurch wird der technische Vorteil erreicht, dass der in der Kopfplatte insbesondere angeordnete weitere piezoelektrische Sensor neben dem insbesondere in der Zwischenplatte angeordneten piezoelektrischen Sensor eine wirksame Erfassung von weiteren Schwingungen ermöglicht, wodurch die Bestimmung des Verschließzustands durch die Steuerung verbessert werden kann.

In einer Ausführungsform weist das erste Presswerkzeug einen Pressstempel auf, wobei der Stanzantrieb ausgebildet ist, den Pressstempel gegenüber dem zweiten Presswerkzeug zu verlagern, um das in dem Aufnahmebereich aufgenommene Halbzeug zu stanzen, wobei der Pressstempel insbesondere durch eine Öffnung des Fixierungselements, der Zwischenplatte und/oder der Kopfplatte führbar ist, um das in dem Aufnahmebereich aufgenommene Halbzeug zu stanzen.

Dadurch wird der technische Vorteil erreicht, dass der Pressstempel des ersten Presswerkzeugs ein wirksames Stanzen des Halbzeugs sicherstellt.

Insbesondere ist der Stanzantrieb ausgebildet, in einem ersten Schritt das Fixierungselement, insbesondere die Fixierungsplatte, des ersten Presswerkzeugs gegenüber dem zweiten Presswerkzeug zu verlagern, um das Fixierungselement, insbesondere die Fixierungsplatte, an einer Oberseite des in dem Aufnahmebereich aufgenommene Halbzeugs anzulegen und das Halbzeug zu fixieren, und ist der Stanzantrieb insbesondere ausgebildet, in einem sich an den ersten Schritt anschließenden zweiten Schritt den Pressstempel durch eine Öffnung des Fixierungselements gegenüber dem zweiten Presswerkzeug zu verlagern, insbesondere in Richtung des zweiten Presswerkzeugs zu verlagern, um das fixierte Halbzeug zu stanzen.

In einer Ausführungsform weist das zweite Presswerkzeug ein Stabilisierungselement, insbesondere eine Schneidematrize, auf, welches an einer Unterseite des in dem Aufnahmebereich aufgenommenen Halbzeugs anlegbar ist, um das Halbzeug zu stabilisieren.

Dadurch wird der technische Vorteil erreicht, dass das Stabilisierungselement, insbesondere die Schneidematrize, des zweiten Presswerkzeugs eine wirksame Stabilisierung des Halbzeugs von unten sicherstellt. Wenn insbesondere das erste Presswerkzeug, insbesondere ein Fixierungselement des ersten Presswerkzeugs ebenfalls an der Oberseite des Halbzeugs anliegt und dieses fixiert, kann somit eine wirksame beidseitige Stabilisierung, bzw. Fixierung des Halbzeugs zwischen dem ersten und zweiten Presswerkzeug sichergestellt werden.

In einer Ausführungsform weist das Stabilisierungselement einen Durchbruch auf, in welchen das erste Presswerkzeug, insbesondere ein Pressstempel des ersten Presswerkzeugs einführbar ist, um das zwischen dem Stabilisierungselement und dem ersten Presswerkzeug angeordnete Halbzeug zu stanzen.

Dadurch wird der technische Vorteil erreicht, dass das erste Presswerkzeug, insbesondere der Pressstempel, durch das Halbzeug bis in den Durchbruch hindurchbricht und dadurch ein wirksames Stanzen des Halbzeugs sicherstellt.

In einer Ausführungsform umfasst der Stanzantrieb eine rotierende Antriebseinheit, welche mit einem durch die rotierende Antriebseinheit angetriebenen exzentrischen Bauteil verbunden ist, wobei das exzentrische Bauteil mit dem ersten Presswerkzeug gekoppelt ist, um eine Rotationsbewegung der rotierenden Antriebseinheit in eine periodische Vertikalverlagerung des ersten Presswerkzeugs, insbesondere des Pressstempels, umzuwandeln.

Dadurch wird der technische Vorteil erreicht, dass das exzentrische Bauteil, welches sowohl mit der rotierenden Antriebseinheit als auch mit dem ersten Presswerkzeug gekoppelt ist, die Rotationsbewegung der rotierenden Antriebseinheit in eine periodische Linearbewegung, insbesondere eine periodische Vertikalverlagerung, des ersten Presswerkzeugs, insbesondere des Pressstempels, vorteilhaft umwandelt.

In einer Ausführungsform umfasst der Positionssensor einen Drehgeber, welcher ausgebildet ist, eine Mehrzahl von Rotationspositionen der rotierenden Antriebseinheit zu erfassen, wobei die Steuerung ausgebildet ist, auf Basis der erfassten Mehrzahl von Rotationspositionen der rotierenden Antriebseinheit eine Mehrzahl von vertikalen Verlagerungspositionen des ersten Presswerkzeugs, insbesondere des Pressstempels, zu bestimmen.

Dadurch wird der technische Vorteil erreicht, dass der Drehgeber die Rotationspositionen der rotierenden Antriebseinheit, insbesondere die Rotationswinkel erfasst, welche vorteilhaft durch die Steuerung in die vertikalen Verlagerungspositionen umgewandelt werden können, welche durch die Steuerung als Basis für die Bestimmung des Verschleißzustands des ersten und/oder zweiten Presswerkzeugs verwendet werden.

In einer Ausführungsform ist die Steuerung ausgebildet, auf Basis der erfassten Schwingungen des ersten Presswerkzeugs eine Mehrzahl von auf das erste Presswerkzeug wirkenden Presskräften zu bestimmen, wobei die Steuerung ausgebildet ist, die Mehrzahl von bestimmten Presskräften in Abhängigkeit der erfassten Temperatur des ersten Presswerkzeugs anzupassen, um eine Mehrzahl von angepasste Presskräften zu erhalten, wobei die Steuerung ausgebildet ist, die Mehrzahl von angepasste Presskräften in Abhängigkeit der erfassten Mehrzahl von Positionen des ersten Presswerkzeugs auszugeben, um eine Bewertungscharakteristik zu bestimmen, und wobei die Steuerung ausgebildet ist, die Bewertungscharakteristik mit einer Mehrzahl von Referenzcharakteristika, welche jeweils unterschiedlichen Verschleißzuständen des ersten Presswerkzeugs und/oder des zweiten Presswerkzeugs zugeordnet sind, zu vergleichen, um auf Basis des Vergleichs den Verschleißzustand des ersten Presswerkzeugs und/oder des zweiten Presswerkzeugs zu bestimmen.

Dadurch wird der technische Vorteil erreicht, dass eine besonders wirksame Verschleißerfassung des ersten und/oder zweiten Presswerkzeugs durch die Steuerung sichergestellt wird.

Die Steuerung wandelt die durch den piezoelektrischen Sensor erfassten Schwingungen des ersten Presswerkzeugs in eine Mehrzahl von Presskräften um, welche auf das erste Presswerkzeug wirken. Anschließend passt die Steuerung die bestimmte Mehrzahl von Presskräften in Abhängigkeit der erfassten Temperatur an, welche durch den Temperatursensor erfasst wurde. Die entsprechend angepasste Mehrzahl von Presskräften wird durch die Steuerung anschließend in Abhängigkeit der durch den Positionssensor erfassten Mehrzahl von Positionen des ersten Presswerkzeugs im Rahmen einer Bewertungscharakteristik durch die Steuerung ausgegeben. Die entsprechende Bewertungscharakteristik ermöglich der Steuerung einen Rückschluss auf den Verschleißzustand des ersten Presswerkzeugs und/oder des zweiten Presswerkzeugs zu ziehen.

Dazu vergleich die Steuerung die bestimmte Bewertungscharakteristik mit einer Mehrzahl von Referenzcharakteristika, welche jeweils unterschiedlichen Verschleißzuständen des ersten Presswerkzeugs und/oder des zweiten Presswerkzeugs zugeordnet sind. Die entsprechenden Referenzcharakteristika wurden beispielsweise in vorhergehenden Messungen mit bekannten Verschleißzuständen des ersten Presswerkzeugs und/oder des zweiten Presswerkzeugs bestimmt. Auf Basis des Vergleichs zwischen der Bewertungscharakteristik und der Mehrzahl von Referenzcharakteristika kann die Steuerung den Verschleißzustand des ersten Presswerkzeugs und/oder des zweiten Presswerkzeugs vorteilhaft bestimmen.

In einer Ausführungsform umfasst der Temperatursensor ein elektrisches Widerstandelement, wobei der Temperatursensor ausgebildet ist, einen an dem elektrischen Widerstandelement anliegenden elektrischen Widerstand mit einem entsprechenden erfassten Temperaturwert zu korrelieren.

Dadurch wird der technische Vorteil erreicht, dass eine besonders vorteilhafte Temperaturmessung durch den Temperatursensor sichergestellt wird.

Die Aufgabe wird gemäß einem zweiten Aspekt gelöst durch ein Verfahren zum Bestimmen eines Verschleißzustands eines ersten Presswerkzeugs und/oder eines zweiten Presswerkzeugs einer Stanzvorrichtung zum Stanzen eines Halbzeugs, wobei die Stanzvorrichtung ein erstes Presswerkzeug, ein zweites Presswerkzeug, ein zwischen dem ersten Presswerkzeug und dem zweiten Presswerkzeug angeordneten Aufnahmebereich zur Aufnahme des Halbzeugs, einen Stanzantrieb, welcher ausgebildet ist, das erste Presswerkzeug gegenüber dem zweiten Presswerkzeug zu verlagern, um das in dem Aufnahmebereich aufgenommene Halbzeug zu stanzen, und eine Steuerung aufweist, wobei das Verfahren die folgenden Verfahrensschritte umfasst, Erfassen einer Temperatur des ersten Presswerkzeugs durch einen in dem ersten Presswerkzeug angeordneten Temperatursensor, Erfassen von Schwingungen des ersten Presswerkzeugs durch zumindest einen in dem ersten Presswerkzeug angeordneten piezoelektrischen Sensor, Erfassen einer Mehrzahl von Positionen des ersten Presswerkzeugs gegenüber dem zweiten Presswerkzeug durch zumindest einen in dem Stanzvorrichtung angeordneten Positionssensor, und Bestimmen eines Verschleißzustands des ersten Presswerkzeugs und/oder des zweiten Presswerkzeugs auf Basis der erfassten Temperatur des ersten Presswerkzeugs, auf Basis der erfassten Schwingungen des ersten Presswerkzeugs und auf Basis der erfassten Mehrzahl von Positionen des ersten Presswerkzeugs durch die Steuerung.

Durch das Verfahren kann eine wirksame Verschleißerfassung des ersten und/oder zweiten Presswerkzeugs sichergestellt werden.

In einer Ausführungsform umfasst das Bestimmen des Verschleißzustands die folgenden Unterschritte, Bestimmen von einer Mehrzahl von auf das erste Presswerkzeug wirkenden Presskräften auf Basis der durch den piezoelektrischen Sensor erfassten Schwingungen des ersten Presswerkzeugs, Anpassen der bestimmten Presskräfte in Abhängigkeit der erfassten Temperatur des ersten Presswerkzeugs, um eine Mehrzahl von angepassten Presskräften zu erhalten, Ausgeben der Mehrzahl von angepassten Presskräften in Abhängigkeit der erfassten Mehrzahl von Positionen des ersten Presswerkzeugs, um eine Bewertungscharakteristik zu bestimmen, Vergleichen der Bewertungscharakteristik mit einer Mehrzahl von Referenzcharakteristika, welche jeweils unterschiedlichen Verschleißzuständen des ersten Presswerkzeugs und/oder des zweiten Presswerkzeugs zugeordnet sind, um den Verschließzustand des Presswerkzeugs und/oder des zweiten Presswerkzeugs auf Basis des Vergleichs zu bestimmen.

Dadurch wird der technische Vorteil erreicht, dass eine wirksame Bestimmung des Verschleißzustands des ersten und/oder zweiten Presswerkzeugs sichergestellt werden kann.

Alle in Bezug auf die Stanzvorrichtung gemäß dem ersten Aspekt angeführten Ausführungsformen gelten ebenso als Ausführungsformen für das Verfahren gemäß dem zweiten Aspekt.

Im Folgenden wird die Erfindung anhand von Ausführungsbeispielen und den Figuren näher beschrieben. In den Figuren zeigen:
- Fig. 1: eine perspektivische Darstellung einer Stanzvorrichtung gemäß einem ersten Ausführungsbeispiel;
- Fig. 2: eine perspektivische Darstellung einer Zwischenplatte eines ersten Presswerkzeugs einer Stanzvorrichtung gemäß einem weiteren Ausführungsbeispiel;
- Figs. 3A-C: schematische Darstellungen von Verlagerungszuständen eines ersten Presswerkzeugs einer Stanzvorrichtung gemäß einem weiteren Ausführungsbeispiel;
- Figs. 4A-B: schematische Darstellungen eines piezoelektrischen Sensors eines ersten Presswerkzeugs einer als Exzenterpresse ausgebildeten Stanzvorrichtung gemäß einem weiteren Ausführungsbeispiel;
- Fig. 5: eine perspektivische Darstellung einer Kopfplatte eines erstes Presswerkzeugs einer Stanzvorrichtung gemäß einem weiteren Ausführungsbeispiel; und
- Fig. 6: eine schematische Darstellung eines Verfahrens zum Bestimmen eines Verschleißzustands einer Stanzvorrichtung gemäß einem weiteren Ausführungsbeispiel.

In der folgenden ausführlichen Beschreibung wird auf die beiliegenden Figuren Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen der vorliegenden Erfindung werden unter Bezugnahme auf die Figuren beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der vorliegenden Erfindung zu vermitteln.

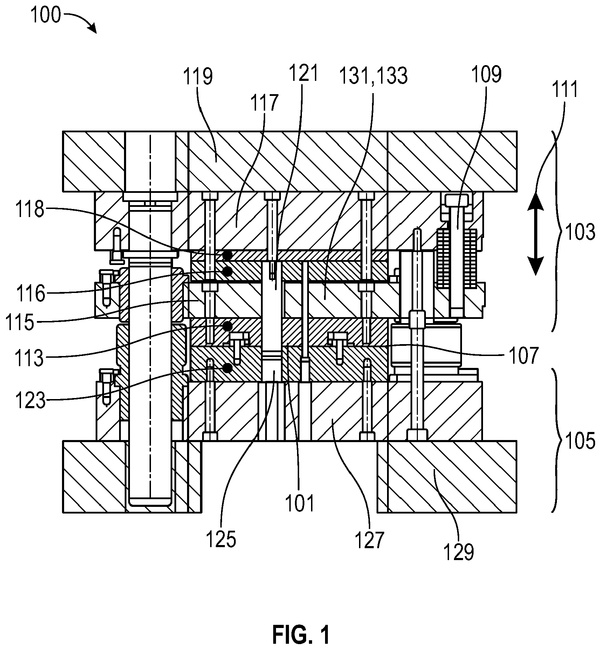

Fig. 1 zeigt eine perspektivische Darstellung einer Stanzvorrichtung gemäß einem ersten Ausführungsbeispiel.

Das in der Fig. 1 dargestellte Stanzvorrichtung 100 ist ausgebildet ein in Fig. 1 nur schematisch dargestelltes Halbzeug 101 zu stanzen, wobei das Halbzeug 101 insbesondere einen Blechstreifen umfasst.

Das Halbzeug 101, insbesondere der Blechstreifen, wird hierbei insbesondere kontinuierlich dem Stanzvorrichtung 100 zugeführt und die Stanzvorrichtung 100 ist ausgebildet, aus dem Halbzeug 101, insbesondere Blechstreifen, eine Mehrzahl von Bauteilen im Rahmen einer Mehrzahl von aufeinanderfolgenden Stanzvorgängen auszustanzen.

Ein Stanzvorgang umfasst hierbei insbesondere ein zumindest abschnittsweises Verformen des Halbzeugs 101, insbesondere des Blechstreifens, ein zumindest abschnittsweises Einführen von Durchbrüchen in das Halbzeug 101, insbesondere in den Blechstreifen, und/oder ein Beschneiden des Halbzeugs 101, insbesondere des Blechstreifens, um die Bauteile auszustanzen.

In der Fig. 1 ist nur ein Stanzwerkzeug der Stanzvorrichtung 100 dargestellt, nicht eine Stanzmaschine der Stanzvorrichtung 100.

Hierzu umfasst die Stanzvorrichtung 100, insbesondere das in Fig. 1 dargestellte Stanzwerkzeug der Stanzvorrichtung 100, ein erstes Presswerkzeug 103 und ein zweites Presswerkzeug 105, insbesondere ein erstes, oberes Presswerkzeug 103 und ein zweites, unteres Presswerkzeug 105.

Die Stanzvorrichtung 100 weist einen zwischen dem ersten Presswerkzeug 103 und dem zweiten Presswerkzeug 105 angeordneten Aufnahmebereich 107 zum Aufnehmen des Halbzeugs 101 auf. In der Fig. 1 liegen das erste Presswerkzeug 103 und das zweite Presswerkzeug 105 an dem in dem Aufnahmebereich 107 aufgenommenen Halbzeug 101 an, so dass der Aufnahmebereich 107 lediglich schematisch dargestellt ist.

Ein in der Fig. 1 nur abschnittsweise dargestellter Stanzantrieb 109 der Stanzmaschine der Stanzvorrichtung 100 ist ausgebildet, das erste Presswerkzeug 103 gegenüber dem zweiten Presswerkzeug 105 zu verlagern, um das in dem Aufnahmebereich 107 aufgenommene Halbzeug 101 zu stanzen.

Der Stanzantrieb 109 ist ausgebildet, das erste Presswerkzeug 103 gegenüber dem zweiten Presswerkzeug 105 entlang einer vertikalen Verlagerungsrichtung 111 zu verlagern, insbesondere periodisch zu verlagern.

Durch die periodische Verlagerung des ersten Presswerkzeugs 103 wird das erste Presswerkzeug 103 in einem ersten Verlagerungsschritt entlang der vertikalen Verlagerungsrichtung 111 von dem zweiten Presswerkzeug 105 weg verlagert, insbesondere aus der in Fig. 1 gezeigten Darstellung nach oben verlagert, so zwischen dem ersten Presswerkzeug 103 und dem zweiten Presswerkzeug 105 ein ausreichender Abstand vorhanden ist, damit das Halbzeug 101 in den Aufnahmebereich 107 eingeführt werden kann.

Durch die periodische Verlagerung des ersten Presswerkzeugs 103 wird das erste Presswerkzeug 103 in einem sich an den ersten Verlagerungsschritt anschließenden zweiten Verlagerungsschritt entlang der vertikalen Verlagerungsrichtung 111 auf das zweite Presswerkzeug 105 zu verlagert, insbesondere nach unten verlagert, um den in der Fig. 1 dargestellten Zustand zu erreichen, so dass das zwischen dem ersten Presswerkzeug 103 und dem zweiten Presswerkzeugt 105 in dem Aufnahmebereich 107 aufgenommene Halbzeug 101 vorteilhaft gestanzt werden kann.

Kombiniert man die periodische Verlagerung des ersten Presswerkzeugs 103 entlang der vertikalen Verlagerungsrichtung 111 mit einer kontinuierlichen Verlagerung des Halbzeugs 101, insbesondere des Blechstreifens, in einer in Fig. 1 nicht dargestellten horizontalen Verlagerungsrichtung, kann aus dem Halbzeug 101 während eines kontinuierlichen Stanzprozesses eine Vielzahl von Bauteilen ausgestanzt werden.

Hierzu ist das zweite Presswerkzeug 105 insbesondere innerhalb der Stanzvorrichtung 100 nicht verlagerbar angeordnet, so dass die Position des zweiten Presswerkzeugs 105 nicht verändert wird, so dass lediglich das erste Presswerkzeug 103 gegenüber dem ortsfest angeordneten zweiten Presswerkzeug 105 verlagert wird, insbesondere periodisch entlang der vertikalen Verlagerungsrichtung 111 verlagert wird.

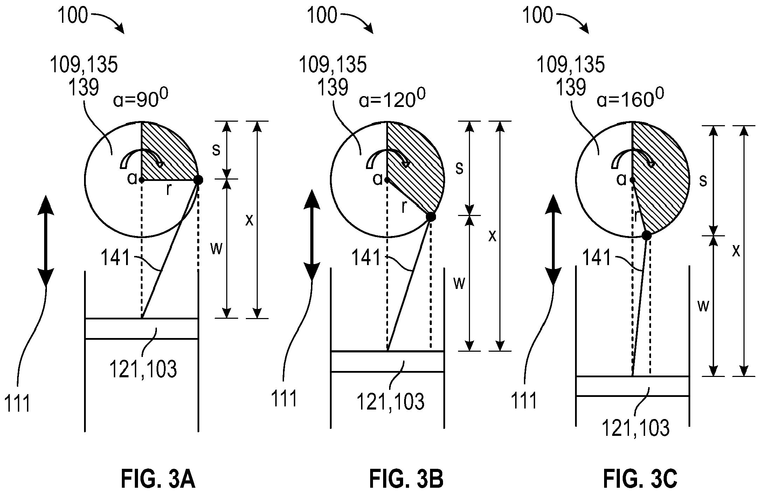

Der in Fig. 1 lediglich schematisch dargestellte Stanzantrieb 109 umfasst insbesondere eine rotierende Antriebseinheit, welche mit einem durch die rotierende Antriebseinheit angetriebenen exzentrischen Bauteil verbunden ist, wobei das exzentrische Bauteil mit dem ersten Presswerkzeug 103 gekoppelt ist, um eine Rotationsbewegung der rotierenden Antriebseinheit in eine periodische Vertikalverlagerung des ersten Presswerkzeugs 103 entlang der vertikalen Verlagerungsrichtung 111 umzuwandeln. In Fig. 1 ist die rotierende Antriebseinheit und das exzentrische Bauteil nicht dargestellt. Für weitere Details hierzu wird auf die Figuren 3A, 3B und 3C verwiesen.

Im Folgenden wird nun auf die einzelnen Bauteile des ersten Presswerkzeugs 103 eingegangen.

Das erste Presswerkzeug 103 weist ein Fixierungselement 113, insbesondere eine Fixierungsplatte, auf, welches an einer Oberseite des in dem Aufnahmebereich 107 aufgenommenen Halbzeugs 101 anlegbar ist, insbesondere mittels einer durch den Stanzantrieb 109 vermittelten Verlagerung des Fixierungselements 113 gegenüber dem zweiten Presswerkzeug 105, um das in dem Aufnahmebereich 107 aufgenommene Halbzeug 101 zu fixieren.

Das Fixierungselement 113, insbesondere die Fixierungsplatte dient somit als ein Niederhalter für das in dem Aufnahmebereich 107 aufgenommene Halbzeug 101.

Das erste Presswerkzeug 103 weist ferner eine Zwischenplatte 115 auf, welche mit einer Oberseite des Fixierungselements 113, insbesondere der Fixierungsplatte, verbunden ist.

Das erste Presswerkzeug 103 weist ferner eine Kopfplatte 117 auf, welche mit einer Oberseite der Zwischenplatte 115, verbunden ist. Insbesondere kann zwischen der Zwischenplatte 115 und der Kopfplatte 117 eine Stempelhalteplatte 116 und eine Druckplatte 118 angeordnet sein.

Das erste Presswerkzeug 103 weist ferner eine obere Aufspannplatte 119 auf, welche mit einer Oberseite der Zwischenplatte 115, verbunden ist, und insbesondere das erste Presswerkzeug 103 oberseitig abschließt.

Wie in der Fig. 1 lediglich schematisch dargestellt ist, sind das Fixierungselement 113, insbesondere die Fixierungsplatte, die Zwischenplatte 115, die Stempelhalteplatte 116, die Druckplatte 118 und/oder Kopfplatte 117 insbesondere durch Schraubverbindungen miteinander verbunden, um einen integrale Aufbau des ersten Presswerkzeugs 103 sicherzustellen.

Das erste Presswerkzeug 103 weist einen Pressstempel 121 auf, wobei der Stanzantrieb 109 ausgebildet ist, den Pressstempel 121 gegenüber dem zweiten Presswerkzeug 105 zu verlagern, um das in dem Aufnahmebereich 107 aufgenommene Halbzeug zu 101 stanzen. Aus der Fig. 1 ist ersichtlich, dass der Pressstempel 121 insbesondere durch eine Öffnung des Fixierungselements 113, der Zwischenplatte 115, der Stempelhalteplatte 116, der Druckplatte 118 und der Kopfplatte 117 führbar ist, um das in dem Aufnahmebereich 107 aufgenommene Halbzeug 101 zu stanzen.

Insbesondere wird in einem ersten Schritt zuerst das erste Presswerkzeug 103, insbesondere das Fixierungselement 113, auf die Oberseite des Halbzeugs 101 aufgelegt, um das Halbzeug 101 zu fixieren und wird in einem sich an den ersten Schritt anschließenden zweiten Schritt der Pressstempel 121 gegenüber dem Fixierungselement 113 verlagert, um das in dem Aufnahmebereich 107 aufgenommene Halbzeug 101 zu stanzen.

Im Folgenden wird nun auf die einzelnen Bauteile des zweiten Presswerkzeugs 105 eingegangen.

Das zweite Presswerkzeug 105 weist ein Stabilisierungselement 123, insbesondere eine Schneidematrize, auf, welches an einer Unterseite des in dem Aufnahmebereich 107 aufgenommenen Halbzeugs 101 anlegbar ist, um das Halbzeug 101 zu stabilisieren. Das Stabilisierungselement 123, insbesondere die Schneidematrize, stellt somit eine wirksame unterseitige Stütze für das Halbzeug 101 sicher.

Hierbei weist das Stabilisierungselement 123 einen Durchbruch 125 auf, in welchen der Pressstempel 121 des ersten Presswerkzeugs 103 einführbar ist, um das zwischen dem Stabilisierungselement 123 und dem ersten Presswerkzeug 103 angeordnete Halbzeug 101 zu stanzen. Aus dem Halbzeug 101 ausgestanzter Verschnitt kann durch den Durchbruch 125 nach unten fallen und aus dem Stanzvorrichtung 100 abgeführt werden.

Das zweite Presswerkzeug 105 weist insbesondere eine Grundplatte 127 auf, welche mit einer Unterseite des Stabilisierungselements 123 verbunden ist, und weist insbesondere eine untere Aufspannplatte 129 auf, welche mit einer Unterseite der Grundplatte 127, verbunden ist, und insbesondere das zweite Presswerkzeug 105 unterseitig abschließt. Wie aus der Fig. 1 hervorgeht, ist die Grundplatte 127 mit dem Stabilisierungselement 123 insbesondere durch Schraubverbindungen verbunden.

Herkömmliche Stanzvorrichtungen verfügen üblicherweise über keine Sensorik, so dass der Verschleißzustand von herkömmlichen Stanzvorrichtungen oftmals nicht überprüft werden kann und ein Schaden an entsprechenden herkömmlichen Stanzvorrichtungen oftmals nur erkannt wird, wenn das herkömmliche Stanzvorrichtung vollständig ausfällt, oder wenn die ausgestanzten Bauteile nicht mehr die erforderlichen Qualitätskriterien erfüllen.

Zum Erkennen eines Verschließzustands des ersten und/oder zweiten Presswerkzeugs 103, 105 weist die Stanzvorrichtung 100 gemäß der vorliegenden Anmeldung eine Mehrzahl von Sensoren zum Erfassen von Parametern auf, welche von einer Steuerung der Stanzvorrichtung 100 ausgewertet werden.

Gemäß der vorliegenden Anmeldung weist das erste Presswerkzeug 103, insbesondere die Zwischenplatte 115, zumindest einen Temperatursensor 131 auf, welcher ausgebildet ist, eine Temperatur des ersten Presswerkzeugs 103 zu erfassen, und weist das erste Presswerkzeug 103, insbesondere die Zwischenplatte 115, zumindest einen piezoelektrischen Sensor 133 auf, welcher ausgebildet ist, Schwingungen des ersten Presswerkzeugs 103 zu erfassen. Der Temperatursensor 131 und der piezoelektrische Sensor 133 sind in der Fig. 1 nur schematisch dargestellt.

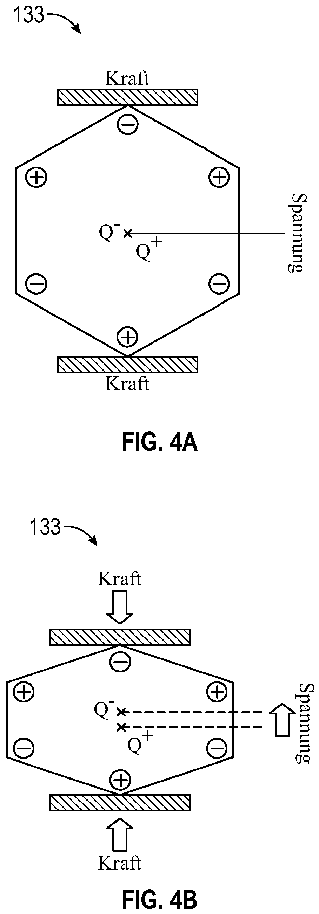

Durch den zumindest einen piezoelektrischen Sensor 133 können Schwingungen der Stanzvorrichtung 100 erfasst werden. Hierbei hat jede Stanzvorrichtung 100 ein individuelles Schwingungsprofil, welches durch den piezoelektrischen Sensor 133 überwacht werden kann. Insbesondere ändert sich das individuelle Schwingungsprofil der entsprechenden Stanzvorrichtung 100 während eines andauernden Produktionsprozesses zur Herstellung von ausgestanzten Bauteilen, wobei eine entsprechende Veränderung des individuellen Schwingungsprofils durch den piezoelektrischen Sensor 133 erfasst werden kann. Für eine entsprechend schematische Darstellung eines piezoelektrischen Sensors 133 und dessen Funktion wird auf die Ausführungen zu den Figuren 4A und 4B verwiesen.

Aufgrund der Reibung von einzelnen Komponenten der Stanzvorrichtung 100 und insbesondere aufgrund der Reibung zwischen dem Halbzeug 101 und dem ersten und/oder zweiten Presswerkzeug 103, 105 entsteht Wärme, welche in einer thermischen Ausdehnung des ersten und/oder zweiten Presswerkzeugs 103, 105 resultiert.

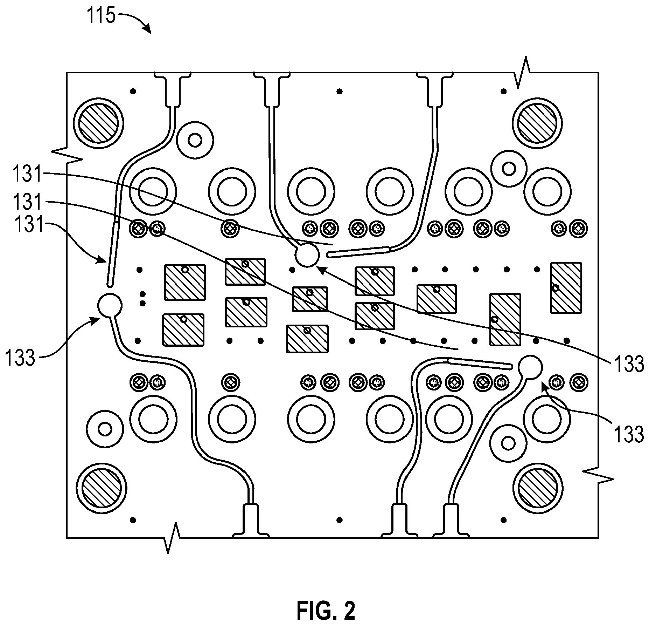

Hierbei liegt insbesondere ein Zusammenhang zwischen der durch den Temperatursensor 131 erfassten Temperatur des ersten Presswerkzeugs 103 und von entsprechenden durch den piezoelektrischen Sensor 133 erfassten Schwingungen des ersten Presswerkzeugs 103 vor, so dass es von Vorteil sein kann, den Temperatursensor 131 und den piezoelektrischen Sensor 133 in räumlicher Nähe an dem ersten Presswerkzeug 103, insbesondere in der Zwischenplatte 115, zu positionieren. Für eine entsprechende Darstellung von Temperatursensoren 131 und piezoelektrischen Sensoren 133 an dem ersten Presswerkzeug 103 wird auf die Ausführungen zur Fig. 2 verwiesen.

Die Stanzvorrichtung 100 weist ferner zumindest einen in Fig. 1 nicht dargestellten Positionssensor 135 auf, welcher ausgebildet ist, eine Mehrzahl von Positionen, insbesondere vertikale Verlagerungspositionen, des ersten Presswerkzeugs 103 gegenüber dem zweiten Presswerkzeug 105 zu erfassen.

Hierbei umfasst der Positionssensor 135 insbesondere einen Drehgeber, welcher ausgebildet ist, eine Rotationsposition der rotierenden Antriebseinheit des Stanzantriebs 109 zu erfassen, wobei eine in Fig. 1 nicht dargestellte Steuerung 137 der Stanzvorrichtung 100 ausgebildet ist, auf Basis der erfassten Rotationsposition der rotierenden Antriebseinheit eine Mehrzahl von vertikalen Verlagerungsposition des ersten Presswerkzeugs 103 insbesondere des Pressstempels 121, zu bestimmen.

Für eine Korrelation von entsprechenden Rotationspositionen der rotierenden Antriebseinheit des Stanzantriebs 109 mit den entsprechenden vertikale Verlagerungspositionen des Pressstempels 121 des ersten Presswerkzeugs 103 wird auf nachfolgenden Figuren 3A, 3B und 3C verwiesen.

Die in Fig. 1 nicht dargestellte Steuerung 137 der Stanzvorrichtung 100 ist ausgebildet, auf Basis der durch den Temperatursensor 131 erfassten Temperatur des ersten Presswerkzeugs 103, auf Basis der durch den piezoelektrischen Sensor 133 erfassten Schwingungen des ersten Presswerkzeugs 103 und auf Basis der erfassten Mehrzahl von Positionen, insbesondere der Mehrzahl von vertikalen Verlagerungspositionen, des ersten Presswerkzeugs 103, insbesondere des Pressstempels 121, einen Verschleißzustand des ersten Presswerkzeugs 103 und/oder des zweiten Presswerkzeugs 105 zu bestimmen.

Für weitere Details zur Bestimmung des Verschleißzustands des ersten Presswerkzeugs 103 und/oder des zweiten Presswerkzeugs 105 auf Basis der erfassten Parameter durch die Steuerung 137 wird auf die nachfolgenden Ausführungen verwiesen.

Somit wird durch die Stanzvorrichtung 100 gemäß der vorliegenden Offenbarung eine kontinuierliche Zustandsüberwachung für die Stanzvorrichtung 100 ermöglicht, was die Grundlage für eine vorrausschauende Wartung der Stanzvorrichtung 100 ermöglicht. Insbesondere kann erkannt werden, sobald ein Verschleißzustand des ersten Presswerkzeugs 103 und/oder des zweiten Presswerkzeugs 105 einen kritischen Wert erreicht, um eine Wartung des ersten Presswerkzeugs 103 und/oder des zweiten Presswerkzeugs 105 vorzunehmen, bevor die Stanzvorrichtung 100 komplett ausfällt, bzw. bevor die Qualität der durch die Stanzvorrichtung 100 ausgestanzten Bauteile so stark abfällt, dass die ausgestanzten Bauteile verworfen werden müssen. Dadurch kann eine Reduktion von ungewollten Stillständen der Stanzvorrichtung 100 vermieden werden und zusätzliche Kosten können vermeiden werden.

Fig. 2 zeigt eine perspektivische Darstellung einer Zwischenplatte eines ersten Presswerkzeugs einer Stanzvorrichtung gemäß einem weiteren Ausführungsbeispiel.

Fig. 2 zeigt eine Zwischenplatte 115 eines ersten Presswerkzeugs 103 einer Stanzvorrichtung 100. Für genauere Details der Stanzvorrichtung 100 und des ersten Presswerkzeugs 103 wird auf die Ausführungen zur Fig. 1 verwiesen.

Aus der Fig. 2 ist zu entnehmen, dass die Temperatursensoren 131 und die piezoelektrischen Sensoren 133 in räumlicher Nähe zueinander angeordnet sind. Da die durch die piezoelektrischen Sensoren 133 erfassten Schwingungen des ersten Presswerkzeugs 103, insbesondere der Zwischenplatte 115 abhängig sind von der durch die Temperatursensoren 131 erfassten Temperatur des ersten Presswerkzeugs 103, insbesondere der Zwischenplatte 115, kann durch die räumliche Nähe der beiden Sensoren, eine wirksame sensorische Erfassung der entsprechenden Parameter durchgeführt werden.

Die Figuren 3A, 3B und 3C zeigen schematische Darstellung von Verlagerungszuständen eines ersten Presswerkzeugs einer als Exzenterpresse ausgebildeten Stanzvorrichtung gemäß einem weiteren Ausführungsbeispiel.

In den Figuren 3A, 3B und 3C ist ein jeweiliger Ausschnitt einer Stanzvorrichtung 100 mit einem Stanzantrieb 109 gezeigt. Der Stanzantrieb 109 umfasst hierbei eine rotierende Antriebseinheit 139, welche mit einem exzentrischen Bauteil 141 verbunden ist, wobei das exzentrische Bauteil 141 mit einem Pressstempel 121 des ersten Presswerkzeugs 103 der Stanzvorrichtung 100 gekoppelt ist. Eine Rotationsbewegung der rotierenden Antriebseinheit 139 wird durch das exzentrische Bauteil 141 in eine periodische Vertikalverlagerung des Pressstempels 121 des ersten Presswerkzeugs 103 umgewandt, so dass der Pressstempel 121 des ersten Presswerkzeugs 103 entlang einer vertikalen Verlagerungsrichtung 111 verlagert wird.

Durch einen in Fig. 3A, 3B und 3C lediglich schematisch dargestellten Positionssensor 135, welcher als Drehgeber ausgebildet ist, wird für jeden der in den Figuren 3A, 3B und 3C dargestellten Zustände jeweils eine Rotationsposition der rotierenden Antriebseinheit 139 bestimmt. In der Fig. 3A beträgt die bestimmte Rotationsposition 90°, in der Fig. 3B beträgt die bestimmte Rotationsposition 120°, und in der Fig. 3C beträgt die bestimmte Rotationsposition 160°.

Die entsprechende durch den Positionssensor 135, insbesondere Drehgeber, erfasste jeweilige Rotationsposition der rotierenden Antriebseinheit 139 korreliert mit einer vertikalen Verlagerungsposition des Pressstempels 121 des ersten Presswerkzeugs 103.

Aus den Figuren 3A, 3B und 3C kann abgeleitet werden, dass der obere Totpunkt, d.h. die maximale Auslenkung des Pressstempels 121 des ersten Presswerkzeugs 103 nach oben, bei einer Rotationsposition von 0°, bzw. 360° erhalten wird.

Aus den Figuren 3A, 3B und 3C kann abgeleitet werden, dass der untere Totpunkt, d.h. die maximale Auslenkung des Pressstempels 121 des ersten Presswerkzeugs 103 nach unten, d.h. die Stanzposition, bei einer Rotationsposition von 180° erhalten wird.

Aus den Figuren 3A, 3B und 3C kann abgeleitet werden, dass sich der Pressstempel 121 zwischen dem untere Totpunkt, d.h. die maximale Auslenkung des Pressstempels 121 des ersten Presswerkzeugs 103 nach unten, und dem oberen Totpunkt, d.h. die maximale Auslenkung des Pressstempels 121 des ersten Presswerkzeugs 103 nach oben, periodisch verlagert werden kann.

Hierbei ist die entsprechende durch den Positionssensor 135, insbesondere Drehgeber erfasste Rotationsposition in Winkelgrad direkt korreliert mit einer vertikalen Verlagerungsposition des ersten Presswerkzeugs 103 entlang der vertikalen Verlagerungsrichtung 111. Eine Steuerung 137 ist ausgebildet, auf Basis der erfassten Rotationsposition der rotierenden Antriebseinheit 139 eine vertikale Verlagerungsposition des Pressstempels 121 des ersten Presswerkzeugs 103 zu bestimmen.

Der in den Figuren 3A bis 3C dargestellte Positionssensor 135 ist nur für eine als Exzenterpresse ausgebildete Stanzvorrichtung 100 geeignet.

Die Figuren 4A und 4B zeigen schematische Darstellung eines piezoelektrischen Sensors eines ersten Presswerkzeugs einer Stanzvorrichtung gemäß einem weiteren Ausführungsbeispiel. Der piezoelektrische Sensor 133 ist ausgebildet Schwingungen des ersten Presswerkzeugs zu erfassen.

Aus der Fig. 4A ist ersichtlich, dass, wenn keine Kraft auf den piezoelektrischen Sensor 133 ausgeübt wird, sich die beiden elektrischen Schwerpunkte exakt in der Mitte des elektrischen Sensors befinden, so dass der piezoelektrische Sensor 133 elektrisch neutral ist.

Aus der Fig. 4B ist ersichtlich, dass, wenn eine Kraft auf den piezoelektrischen Sensor 133 ausgeübt wird, sich die beiden elektrischen Schwerpunkte verschieben und sich von der Mitte des piezoelektrischen Sensors 133 entfernen, so dass eine Potentialdifferenz entsteht, welche durch den piezoelektrischen Sensor 133 als elektrische Spannung ausgegeben wird.

Somit besteht eine Korrelation zwischen den durch den piezoelektrischen Sensor 133 gemessenen Schwingungen des ersten Presswerkzeugs 103 und der auf das erste Presswerkzeug 103 wirkenden Kraft.

Die Steuerung 137 ist somit ausgebildet, auf Basis der durch den piezoelektrischen Sensor 133 erfassten Schwingungen eine Mehrzahl von auf das erste Presselement 103 wirkenden Kräften zu bestimmen.

Aufgrund der Temperaturabhängigkeit der wirkenden Kräfte ist die Steuerung 137 ausgebildet, die Mehrzahl von bestimmten Presskräften in Abhängigkeit der durch den Temperatursensor 131 erfassten Temperatur des ersten Presswerkzeugs 103 anzupassen, um eine Mehrzahl von angepassten Presskräften zu erhalten.

Wenn durch einen Positionssensor 135, insbesondere Drehzahlgeber, der Steuerung 137 ferner eine Mehrzahl von Positionen, insbesondere eine Mehrzahl von vertikalen Verlagerungspositionen, des ersten Presswerkzeugs 103, insbesondere des Pressstempels 121, zu Verfügung steht, kann die Steuerung 137 eine Bewertungscharakteristik bestimmen, welche durch die Mehrzahl der angepassten Presskräfte in Abhängigkeit der erfassten Mehrzahl von Positionen, insbesondere vertikalen Verlagerungspositionen, des ersten Presswerkzeugs 103, insbesondere des Pressstempels 121, bestimmt ist.

Die Steuerung 137 ist anschließend ausgebildet, die bestimmte Bewertungscharakteristik mit einer Mehrzahl von Referenzcharakteristika, welche jeweils unterschiedlichen Verschleißzuständen des ersten Presswerkzeugs 103 und/oder zweiten Presswerkzeugs 105 zugeordnet sind, zu vergleichen, um auf Basis des Vergleichs den Verschleißzustand des ersten Presswerkzeugs 103 und/oder zweiten Presswerkzeugs 105 zu bestimmen.

Somit kann eine wirksame Verschleißüberwachung des ersten Presswerkzeugs 103 und/oder zweiten Presswerkzeugs 105 sichergestellt werden.

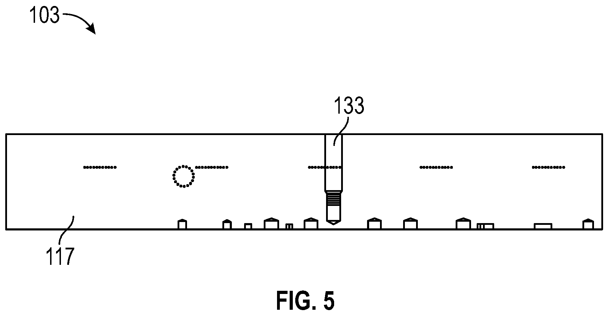

Fig. 5 zeigt eine perspektivische Darstellung einer Kopfplatte eines erstes Presswerkzeugs einer Stanzvorrichtung gemäß einem weiteren Ausführungsbeispiel.

Aus der Fig. 5 ist zu entnehmen, dass in der Kopfplatte 117 des ersten Presswerkzeugs 103 der Stanzvorrichtung 100 ein weiterer piezoelektrischer Sensor 133 angeordnet ist, welcher insbesondere zusätzlich zu dem in der Zwischenplatte 115 des ersten Presswerkzeugs 103 angeordneten piezoelektrischen Sensor 133 angeordnet ist.

Dadurch, dass die Steuerung 137 hierbei die durch den piezoelektrischen Sensor 133 der Zwischenplatte 115 erfassten Schwingungen des ersten Presswerkzeugs 103 und die durch den weiteren piezoelektrischen Sensor 133 der Kopfplatte 117 erfassten weiteren Schwingungen des ersten Presswerkzeugs 103 berücksichtigt, kann die Bestimmung des Verschleißzustands des ersten Presswerkzeugs 103 und/oder des zweiten Presswerkzeugs 105 vorteilhaft verbessert werden.

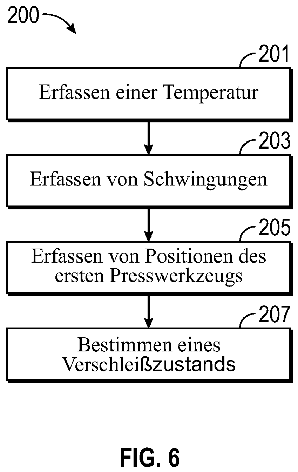

Fig. 6 zeigt eine schematische Darstellung eines Verfahrens zum Bestimmen eines Verschleißzustands einer Stanzvorrichtung gemäß einem weiteren Ausführungsbeispiel.

Das Verfahren umfasst als ersten Verfahrensschritt das Erfassen 201 einer Temperatur des ersten Presswerkzeugs 103 durch einen in dem ersten Presswerkzeug 103 angeordneten Temperatursensor 131.

Das Verfahren umfasst als zweiten Verfahrensschritt das Erfassen 203 von Schwingungen des ersten Presswerkzeugs 103 durch zumindest einen in dem ersten Presswerkzeug 103 angeordneten piezoelektrischen Sensor 133.

Das Verfahren umfasst als dritten Verfahrensschritt das Erfassen 205 einer Mehrzahl von Positionen des ersten Presswerkzeugs 103 gegenüber dem zweiten Presswerkzeug 105 durch zumindest einen in dem Stanzvorrichtung 100 angeordneten Positionssensor 135.

Das Verfahren umfasst als vierten Verfahrensschritt das Bestimmen 207 eines Verschleißzustands des ersten Presswerkzeugs 103 und/oder des zweiten Presswerkzeugs 105 auf Basis der erfassten Temperatur des ersten Presswerkzeugs 103, auf Basis der erfassten Schwingungen des ersten Presswerkzeugs 103 und auf Basis der erfassten Mehrzahl von Positionen des ersten Presswerkzeugs 103 durch die Steuerung 137.

### Bezugszeichenliste

- 100: Stanzvorrichtung
- 101: Halbzeug
- 103: Erstes Presswerkzeug
- 105: Zweites Presswerkzeug
- 107: Aufnahmebereich
- 109: Stanzantrieb
- 111: Vertikale Verlagerungsrichtung
- 113: Fixierungselement
- 115: Zwischenplatte
- 116: Stempelhalteplatte
- 117: Kopfplatte
- 118: Druckplatte
- 119: Obere Aufspannplatte
- 121: Pressstempel
- 123: Stabilisierungselement
- 125: Durchbruch
- 127: Grundplatte
- 129: Untere Aufspannplatte
- 131: Temperatursensor
- 133: Piezoelektrische Sensor
- 135: Positionssensor
- 137: Steuerung
- 139: Rotierende Antriebseinheit
- 141: Exzentrisches Bauteil
- 200: Verfahren zum Bestimmen eines Verschleißzustands einer Stanzvorrichtung
- 201: Erster Verfahrensschritt: Erfassen einer Temperatur
- 203: Zweiter Verfahrensschritt: Erfassen von Schwingungen
- 205: Dritter Verfahrensschritt: Erfassen von Positionen des ersten Presswerkzeugs
- 207: Vierter Verfahrensschritt: Bestimmen eines Verschleißzustands

## Patentansprüche

1. Stanzvorrichtung (100) zum Stanzen eines Halbzeugs (101), umfassend:
ein erstes Presswerkzeug (103),
ein zweites Presswerkzeug (105),
ein zwischen dem ersten Presswerkzeug (103) und dem zweiten Presswerkzeug (105) angeordneter Aufnahmebereich (107) zur Aufnahme des Halbzeugs (101),
einen Stanzantrieb (109), welcher ausgebildet ist, das erste Presswerkzeug (103) gegenüber dem zweiten Presswerkzeug (105) zu verlagern, um das in dem Aufnahmebereich (107) aufgenommene Halbzeug (101) zu stanzen,
wobei das erste Presswerkzeug (103) zumindest einen Temperatursensor (131) aufweist, welcher ausgebildet ist, eine Temperatur des ersten Presswerkzeugs (103) zu erfassen,
wobei das erste Presswerkzeug (103) zumindest einen piezoelektrischen Sensor (133) aufweist, welcher ausgebildet ist, Schwingungen des ersten Presswerkzeugs (103) zu erfassen,
wobei die Stanzvorrichtung (100) zumindest einen Positionssensor (135) aufweist, welcher ausgebildet ist, eine Mehrzahl von Positionen des ersten Presswerkzeugs (103) gegenüber dem zweiten Presswerkzeug (105) zu erfassen,
eine Steuerung (137), welche ausgebildet ist, auf Basis der erfassten Temperatur des ersten Presswerkzeugs (103), auf Basis der erfassten Schwingungen des ersten Presswerkzeugs (103) und auf Basis der erfassten Mehrzahl von Positionen des ersten Presswerkzeugs (103) einen Verschleißzustand des ersten Presswerkzeugs (103) und/oder des zweiten Presswerkzeugs (105) zu bestimmen.

2. Stanzvorrichtung (100) nach Anspruch 1, wobei der Stanzantrieb (109) ausgebildet ist, das erste Presswerkzeug (103) gegenüber dem zweiten Presswerkzeug (105) entlang einer vertikalen Verlagerungsrichtung (111) zu verlagern, insbesondere periodisch zu verlagern, und wobei der Positionssensor (135) ausgebildet ist, eine Mehrzahl von vertikalen Verlagerungspositionen des ersten Presswerkzeugs (103) gegenüber dem zweiten Presswerkzeug (105) zu erfassen.

3. Stanzvorrichtung (100) nach Anspruch 1 oder 2, wobei das zweite Presswerkzeug (105) innerhalb der Stanzvorrichtung (100) nicht verlagerbar angeordnet ist.

4. Stanzvorrichtung (100) nach einem der vorangehenden Ansprüche, wobei das erste Presswerkzeug (103) einen Fixierungselement (113), insbesondere eine Fixierungsplatte, aufweist, welches an einer Oberseite des in dem Aufnahmebereich (107) aufgenommenen Halbzeugs (101) anlegbar ist, insbesondere mittels einer durch den Stanzantrieb (109) vermittelten Verlagerung des Fixierungselements (113) gegenüber dem zweiten Presswerkzeug (105), um das in dem Aufnahmebereich (107) aufgenommene Halbzeug (101) zu fixieren.

5. Stanzvorrichtung (100) nach Anspruch 4, wobei das erste Presswerkzeug (103) eine Zwischenplatte (115) aufweist, welche mit einer Oberseite des Fixierungselements (113), insbesondere der Fixierungsplatte, verbunden ist, wobei der Temperatursensor (131) und/oder piezoelektrische Sensor (133) insbesondere an der Zwischenplatte (115) angeordnet sind.

6. Stanzvorrichtung (100) nach Anspruch 5, wobei das erste Presswerkzeug (103) eine Kopfplatte (117) aufweist, welche mit einer Oberseite der Zwischenplatte (115), verbunden ist, wobei die Stanzvorrichtung (100) insbesondere zumindest einen weiteren piezoelektrischen Sensor (133) aufweist, welcher an der Kopfplatte (117) angeordnet ist, und ausgebildet ist, weitere Schwingungen des ersten Presswerkzeugs (103) zu erfassen, wobei die Steuerung (137) insbesondere ausgebildet ist, auf Basis der erfassten Temperatur des ersten Presswerkzeugs (103), auf Basis der erfassten Schwingungen des ersten Presswerkzeugs (103), auf Basis der erfassten weiteren Schwingungen des ersten Presswerkzeugs (103) und auf Basis der erfassten Mehrzahl von Positionen des ersten Presswerkzeugs (103) einen Verschleißzustand des ersten Presswerkzeugs (103) und/oder des zweiten Presswerkzeugs (105) zu bestimmen.

7. Stanzvorrichtung (100) nach einem der vorangehenden Ansprüche, wobei das erste Presswerkzeug (103) einen Pressstempel (121) aufweist, wobei der Stanzantrieb (109) ausgebildet ist, den Pressstempel (121) gegenüber dem zweiten Presswerkzeug (105) zu verlagern, um das in dem Aufnahmebereich (107) aufgenommene Halbzeug (101) zu stanzen, wobei der Pressstempel (121) insbesondere durch eine Öffnung des Fixierungselements (113), der Zwischenplatte (115) und/oder der Kopfplatte (117) führbar ist, um das in dem Aufnahmebereich (107) aufgenommene Halbzeug (101) zu stanzen.

8. Stanzvorrichtung (100) nach einem der vorangehenden Ansprüche, wobei das zweite Presswerkzeug (105) ein Stabilisierungselement (123), insbesondere eine Schneidematrize, aufweist, welches an einer Unterseite des in dem Aufnahmebereich (107) aufgenommenen Halbzeugs (101) anlegbar ist, um das Halbzeug (101) zu stabilisieren.

9. Stanzvorrichtung (100) nach Anspruch 8, wobei das Stabilisierungselement (123) einen Durchbruch (125) aufweist, in welchen das erste Presswerkzeug (103), insbesondere ein Pressstempel (121) des ersten Presswerkzeugs (103) einführbar ist, um das zwischen dem Stabilisierungselement (123) und dem ersten Presswerkzeug (103) angeordnete Halbzeug (101) zu stanzen.

10. Stanzvorrichtung (100) nach einem der vorangehenden Ansprüche, wobei der Stanzantrieb (109) eine rotierende Antriebseinheit (139) umfasst, welche mit einem durch die rotierende Antriebseinheit (139) angetriebenen exzentrischen Bauteil (141) verbunden ist, wobei das exzentrische Bauteil (141) mit dem ersten Presswerkzeug (103) gekoppelt ist, um eine Rotationsbewegung der rotierenden Antriebseinheit (139) in eine periodische Vertikalverlagerung des ersten Presswerkzeugs (103), insbesondere des Pressstempels (121), umzuwandeln.

11. Stanzvorrichtung (100) nach Anspruch 10, wobei der Positionssensor (135) einen Drehgeber umfasst, welcher ausgebildet ist, eine Mehrzahl von Rotationspositionen der rotierenden Antriebseinheit (139) zu erfassen, wobei die Steuerung (137) ausgebildet ist, auf Basis der erfassten Mehrzahl von Rotationspositionen der rotierenden Antriebseinheit (139) eine Mehrzahl von vertikalen Verlagerungspositionen des ersten Presswerkzeugs (103), insbesondere des Pressstempels (121), zu bestimmen.

12. Stanzvorrichtung (100) nach einem der vorangehenden Ansprüche, wobei die Steuerung (137) ausgebildet ist, auf Basis der erfassten Schwingungen des ersten Presswerkzeugs (103) eine Mehrzahl von auf das erste Presswerkzeug (103) wirkenden Presskräften zu bestimmen,
wobei die Steuerung (137) ausgebildet ist, die Mehrzahl von bestimmten Presskräften in Abhängigkeit der erfassten Temperatur des ersten Presswerkzeugs (103) anzupassen, um eine Mehrzahl von angepasste Presskräften zu erhalten,
wobei die Steuerung (137) ausgebildet ist, die Mehrzahl von angepasste Presskräften in Abhängigkeit der erfassten Mehrzahl von Positionen des ersten Presswerkzeugs (103) auszugeben, um eine Bewertungscharakteristik zu bestimmen,
wobei die Steuerung (137) ausgebildet ist, die Bewertungscharakteristik mit einer Mehrzahl von Referenzcharakteristika, welche jeweils unterschiedlichen Verschleißzuständen des ersten Presswerkzeugs (103) und/oder des zweiten Presswerkzeugs (105) zugeordnet ist, zu vergleichen, um den Verschleißzustand des ersten Presswerkzeugs (103) und/oder des zweiten Presswerkzeugs (105) zu bestimmen.

13. Stanzvorrichtung (100) nach einem der vorangehenden Ansprüche, wobei der Temperatursensor (131) ein elektrisches Widerstandelement umfasst, wobei der Temperatursensor (131) ausgebildet ist, einen an dem elektrischen Widerstandelement anliegenden elektrischen Widerstand mit einem entsprechenden erfassten Temperaturwert zu korrelieren.

14. Verfahren (200) zum Bestimmen eines Verschleißzustands eines ersten Presswerkzeugs (103) und/oder eines zweiten Presswerkzeugs (105) einer Stanzvorrichtung (100) zum Stanzen eines Halbzeugs (101), wobei die Stanzvorrichtung (100) ein erstes Presswerkzeug (103), ein zweites Presswerkzeug (105), ein zwischen dem ersten Presswerkzeug (103) und dem zweiten Presswerkzeug (105) angeordneten Aufnahmebereich (107) zur Aufnahme des Halbzeugs (101), einen Stanzantrieb (109), welcher ausgebildet ist, das erste Presswerkzeug (103) gegenüber dem zweiten Presswerkzeug (105) zu verlagern, um das in dem Aufnahmebereich (107) aufgenommene Halbzeug (101) zu stanzen, und eine Steuerung (137) aufweist, wobei das Verfahren (200) die folgenden Verfahrensschritte umfasst,
Erfassen (201) einer Temperatur des ersten Presswerkzeugs (103) durch einen in dem ersten Presswerkzeug (103) angeordneten Temperatursensor (131),
Erfassen (203) von Schwingungen des ersten Presswerkzeugs (103) durch zumindest einen in dem ersten Presswerkzeug (103) angeordneten piezoelektrischen Sensor (133),
Erfassen (205) einer Mehrzahl von Positionen des ersten Presswerkzeugs (103) gegenüber dem zweiten Presswerkzeug (105) durch zumindest einen in dem Stanzvorrichtung (100) angeordneten Positionssensor (135), und
Bestimmen (207) eines Verschleißzustands des ersten Presswerkzeugs (103) und/oder des zweiten Presswerkzeugs (105) auf Basis der erfassten Temperatur des ersten Presswerkzeugs (103), auf Basis der erfassten Schwingungen des ersten Presswerkzeugs (103) und auf Basis der erfassten Mehrzahl von Positionen des ersten Presswerkzeugs (103) durch die Steuerung (137).

15. Verfahren (200) nach Anspruch 14, wobei das Bestimmen (207) des Verschleißzustands die folgenden Unterschritte umfasst,
Bestimmen von einer Mehrzahl von auf das erste Presswerkzeug (103) wirkenden Presskräften auf Basis der durch den piezoelektrischen Sensor (133) erfassten Schwingungen des ersten Presswerkzeugs (103),
Anpassen der bestimmten Presskräfte in Abhängigkeit der erfassten Temperatur des ersten Presswerkzeugs (103), um eine Mehrzahl von angepassten Presskräften zu erhalten,
Ausgeben der Mehrzahl von angepassten Presskräften in Abhängigkeit der erfassten Mehrzahl von Positionen des ersten Presswerkzeugs (103), um eine Bewertungscharakteristik zu bestimmen, und
Vergleichen der Bewertungscharakteristik mit einer Mehrzahl von Referenzcharakteristika, welche jeweils unterschiedlichen Verschleißzuständen des ersten Presswerkzeugs (103) und/oder des zweiten Presswerkzeugs (105) zugeordnet sind, um den Verschließzustand des ersten Presswerkzeugs (103) und/oder des zweiten Presswerkzeugs (105) auf Basis des Vergleichs (207-4) zu bestimmen.
